(19) Europäisches Patentamt
European Patent Office
Office européen des brevets

(11) **EP 4 078 083 B1**

## (12) FASCICULE DE BREVET EUROPEEN

(45) Date de publication et mention
de la délivrance du brevet:
**07.06.2023 Bulletin 2023/23**

(21) Numéro de dépôt: **21714647.1**

(22) Date de dépôt: **03.03.2021**

(51) Classification Internationale des Brevets (IPC):
**G01C 11/02** (2006.01)   **G03B 37/00** (2021.01)
**H04N 25/13** (2023.01)   **H04N 25/131** (2023.01)
**G03B 15/00** (2021.01)   **G03B 37/04** (2021.01)

(52) Classification Coopérative des Brevets (CPC):
**G01C 11/025; G03B 15/006; G03B 37/00;**
**G03B 37/04; H04N 25/131; H04N 25/135**

(86) Numéro de dépôt international:
**PCT/FR2021/050360**

(87) Numéro de publication internationale:
**WO 2021/176181 (10.09.2021 Gazette 2021/36)**

(54) **PROCÉDÉ D'ACQUISITION D'IMAGES D'UNE ZONE TERRESTRE PAR UN ENGIN SPATIAL**

VERFAHREN ZUM ERFASSEN VON BILDERN EINES TERRESTRISCHEN BEREICHS UNTER VERWENDUNG EINES RAUMFAHRZEUGES

METHOD FOR ACQUIRING IMAGES OF A TERRESTRIAL REGION USING A SPACECRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.03.2020 FR 2002158**

(43) Date de publication de la demande:
**26.10.2022 Bulletin 2022/43**

(73) Titulaire: **Airbus Defence and Space SAS**
**31402 Toulouse Cedex 4 (FR)**

(72) Inventeurs:
• **GHEZAL, Mehdi**
**31402 TOULOUSE Cedex 4 (FR)**
• **GIRAUD, Emmanuel**
**31402 TOULOUSE (FR)**

(74) Mandataire: **Plasseraud IP**
**66, rue de la Chaussée d'Antin**
**75440 Paris Cedex 09 (FR)**

(56) Documents cités:
**FR-A1- 2 597 985      US-A1- 2019 084 698**
**US-A1- 2019 383 607**

• **KING JEFFERY T ET AL: "A simple approach for predicting time-optimal slew capability", ACTA ASTRONAUTICA, PERGAMON PRESS, ELMSFORD, GB, vol. 120, 17 décembre 2015 (2015-12-17), pages 159-170, XP029406749, ISSN: 0094-5765, DOI: 10.1016/J.ACTAASTRO.2015.12.009**

**Description**

**Domaine technique**

La présente invention appartient au domaine de l'imagerie terrestre par des engins spatiaux, tels que des satellites d'observation, et concerne plus particulièrement un procédé d'acquisition d'images d'une zone terrestre par un engin spatial en orbite défilante, ainsi qu'un engin spatial pour la mise en oeuvre d'un tel procédé d'acquisition.

**Etat de la technique**

Les missions d'observation terrestre effectuées par un engin spatial consistent à acquérir des images de parties de la surface de la Terre, c'est-à-dire effectuer des prises de vues de celle-ci. De telles acquisitions sont par exemple réalisées en réponse à des requêtes clients, et servent de base à la production d'images composites finales.

De manière conventionnelle, un tel engin spatial suit une orbite défilante autour de la Terre afin de réaliser des acquisitions lors de son survol de la surface de la Terre. A cet effet, il comporte un instrument d'observation associé à une résolution spatiale prédéterminée ainsi qu'à une ligne de visée optique. De manière connue, une telle ligne de visée optique forme la partie sortante du chemin optique de l'instrument d'observation, et pointe en direction de la surface de la Terre.

De plus, l'instrument d'observation est configuré de sorte à présenter un champ de vision dont la projection au sol au Nadir présente une longueur prédéterminée selon la direction de défilement de l'engin spatial. Les caractéristiques de ce champ de vision dépendent, de manière connue en soi, des éléments optiques composant l'instrument d'observation et en particulier les détecteurs ainsi que de leurs arrangements et positions respectifs. On comprend ainsi que cette longueur prédéterminée conditionne, au moins en partie, la dimension des acquisitions réalisées par l'instrument d'observation suivant la direction de défilement.

Lorsqu'il s'agit d'observer une zone terrestre s'étendant sur une distance supérieure à ladite longueur prédéterminée associée à l'instrument d'observation, plusieurs méthodes d'acquisition peuvent être employées. Parmi ces dernières, celles de type balayage sont souvent employées. Selon un exemple plus spécifique, un « balayage par bandes » (« pushbroom » dans la littérature anglo-saxonne) est notamment mis en oeuvre.

Toutefois, le défilement de l'engin spatial a un impact sur la capacité de l'instrument d'observation à effectuer des acquisitions nettes et précises. La réalisation d'acquisitions exemptes de tout effet de filé (encore dit effet de « flou cinétique ») est en effet problématique, et ce d'autant plus lorsque la résolution recherchée est élevée. Une solution, au moins théorique, pour limiter l'effet de filé consiste à diminuer le temps d'acquisition, c'est-à-dire réaliser des prises de vues rapides, ou à déplacer les détecteurs par rapport aux éléments optiques de l'instrument d'observation (voir par exemple FR 2597985 A1).

En outre, pour fonctionner à fréquence élevée, l'instrument d'observation nécessite une électronique complexe, et donc onéreuse. Qui plus est, un faible temps d'acquisition a un impact défavorable sur le rapport signal sur bruit (encore dit « SNR », acronyme de l'expression anglo-saxonne « signal to noise ratio ») des acquisitions. La mise en oeuvre de configurations de type TDI (acronyme de l'expression anglo-saxonne « Time Delay and Intégration ») permet de réduire ce défaut, au prix d'une complexité électronique beaucoup plus importante, et de contraintes importantes sur le contrôle d'attitude.

Enfin, un temps d'acquisition réduit implique également une grande quantité d'informations à traiter sur un faible horizon temporel. L'électronique de l'engin spatial devrait donc être dimensionnée pour lire et traiter ces informations, ce qui devient très rapidement impossible à mesure que le temps d'acquisition diminue. Il convient alors de transférer ces informations au sol en vue d'une phase de post-traitement, ce qui est contraignant en raison du débit important de descente des données requis par rapport à la bande passante radiofréquences disponible ainsi que du temps nécessaire à l'obtention des images composites finales.

Le brevet US 8487996 utilise une autre technique de balayage permettant des acquisitions multiples d'une même partie de la surface de la Terre (techniques encore dites « pushframe » dans la littérature anglo-saxonne), par exemple au moyen de différents filtres spectraux. Il est alors possible d'obtenir des acquisitions présentant un SNR satisfaisant malgré un temps d'acquisition réduit, sans faire appel nécessairement à des électroniques TDI. Cela étant, l'obtention des images composites finales nécessite quant à elle la mise en oeuvre de techniques d'enrichissement sur la base des informations issues des acquisitions. Il en résulte des opérations de post-traitement complexes et coûteuses en temps. Par ailleurs, ces techniques de balayage sont pénalisantes car elles génèrent également d'importants volumes de données d'acquisition.

**Exposé de l'invention**

La présente invention a pour objectif de remédier à tout ou partie des inconvénients de l'art antérieur, notamment ceux exposés ci-avant, en proposant une solution qui permette d'acquérir des images d'une zone terrestre par un engin spatial en orbite défilante avec une excellente qualité d'image, sans effet de filé et en gardant une bonne capacité d'acquisition d'images.

En outre, la présente invention vise à permettre, dans certains modes de réalisation, l'acquisition de bandes de longueur élevée suivant une direction de défilement de l'engin spatial et/ou vise à limiter la complexité de l'électronique embarquée et/ou vise à limiter la quantité d'informations échangées entre l'engin spatial et une station au sol.

A cet effet, et selon un premier aspect, il est proposé un procédé d'acquisition d'images d'une zone terrestre Z par un engin spatial en orbite défilante autour de la Terre suivant une direction de défilement et avec une vitesse de défilement au sol $V_{sol}$, ledit engin spatial comportant un instrument d'observation associé à un champ de vision fixe en repère engin spatial formant une empreinte au sol de longueur L suivant la direction de défilement, et associé à une résolution spatiale $R_s$ suivant la direction de défilement. Ledit procédé d'acquisition comporte :

- une étape d'observation d'une partie $P_1$ de la zone terrestre Z, comportant une étape de contrôle de l'attitude de l'engin spatial pendant un intervalle temporel de durée $\alpha$ supérieure à $R_s/V_{sol}$, l'attitude de l'engin spatial étant contrôlée de sorte que l'empreinte au sol du champ de vision est maintenue immobile pendant la durée $\alpha$ et correspond à ladite partie $P_1$, et une étape d'acquisition par l'instrument d'observation d'une image de la partie $P_1$ au cours de l'intervalle temporel de durée $\alpha$,
- une étape de modification de l'attitude en tangage de l'engin spatial de sorte à orienter le champ de vision de telle sorte que l'empreinte au sol correspond à une partie $P_2$ de la zone terrestre Z, les parties $P_1$ et $P_2$ de la zone terrestre Z étant contigües ou se recouvrant au plus partiellement suivant la direction de défilement,
- une étape d'observation de la partie $P_2$ de la zone terrestre Z.

En outre, l'étape de modification d'attitude en tangage est de préférence exécutée au cours d'un intervalle temporel de durée $\beta$ telle que la quantité $V_{sol} \cdot (\alpha + \beta) \cdot 1/L$ est inférieure à une valeur prédéterminée R, R étant égal à 3 (R = 3), ou égal à 2.3 (R = 2.3), ou égal à 2 (R = 2).

Ainsi, le procédé d'acquisition comporte une étape d'observation d'une partie $P_1$ de la zone terrestre Z. Au cours de cette étape d'observation, et pendant toute la durée $\alpha$ d'un intervalle temporel, l'attitude de l'engin spatial est contrôlée de sorte que l'empreinte au sol du champ de vision est maintenue immobile pendant toute la durée $\alpha$ et correspond à ladite partie $P_7$. La partie $P_1$ est acquise au cours de cet intervalle temporel.

Par « maintenue immobile », on entend que la consigne d'attitude de l'engin spatial est déterminée pour maintenir l'empreinte au sol sensiblement immobile malgré le défilement de l'engin spatial sur son orbite. Par « sensiblement immobile », on entend que l'objectif du contrôle d'attitude est de maintenir l'empreinte au sol du champ de vision immobile, mais que celle-ci peut varier légèrement pendant la durée $\alpha$ de l'intervalle temporel, du fait par exemple d'erreurs de contrôle d'attitude et/ou de bruits de mesure. Du fait d'un tel contrôle d'attitude, on comprend que l'incidence d'une ligne de visée optique de l'instrument d'observation sur la surface de la Terre varie pendant la durée $\alpha$. Par exemple, si l'incidence de la ligne de visée optique est sensiblement normale à la surface de la Terre au début de l'intervalle temporel de durée $\alpha$, alors l'incidence de ladite ligne de visée optique sur ladite surface de la Terre sera légèrement oblique à la fin de l'intervalle temporel. Ainsi, la consigne d'attitude donnée est que la ligne de visée optique reste pointée vers un point S fixe sur la surface terrestre, c'est-à-dire que le défilement de la ligne de visée optique au sol est stoppé, et sans rotation du satellite autour de ladite ligne de visée optique.

Ainsi, contrairement aux solutions de l'art antérieur, l'empreinte au sol de l'instrument d'observation ne se déplace pas pendant l'acquisition d'une partie de la zone terrestre Z. Il n'y a donc pas d'effet de filé. La durée $\alpha$ est avantageusement déterminée de sorte à permettre l'acquisition de la partie $P_1$ avec un SNR suffisant. En particulier, la durée $\alpha$ est avantageusement supérieure à $R_s/V_{sol}$, voire significativement supérieure à $R_s/V_{sol}$ (facteur 100 voire 1000). De préférence, la durée d'acquisition de la partie $P_1$, comprise dans la durée $\alpha$, peut également être supérieure à $R_s/V_{sol}$ voire significativement supérieure à $R_s/V_{sol}$ (facteur 100 voire 1000).

Après l'étape d'observation de la partie $P_1$, le procédé d'acquisition comporte une étape de modification d'attitude en tangage de l'engin spatial visant à orienter le champ de vision de telle sorte que l'empreinte au sol correspond à une partie $P_2$ de la zone terrestre Z. Les parties $P_1$ et $P_2$ de la zone terrestre Z sont par exemple contigües, c'est-à-dire qu'elles se touchent sans se recouvrir mutuellement, ou bien lesdites parties $P_1$ et $P_2$ se recouvrent au plus partiellement suivant la direction de défilement. Lorsque les parties $P_1$ et $P_2$ se recouvrent partiellement, la surface de recouvrement représente de préférence moins de 10% de la surface de l'empreinte au sol pour l'acquisition de la partie $P_1$, voire moins de 5% de ladite surface de l'empreinte au sol pour l'acquisition de ladite $P_1$. De préférence, les parties $P_1$ et $P_2$ se trouvent dans le prolongement l'une de l'autre, c'est-à-dire qu'elles ne sont pas décalées l'une par rapport à l'autre transversalement à la direction de défilement.

En outre, l'étape de modification d'attitude en tangage est de préférence exécutée au cours d'un intervalle temporel de durée $\beta$ telle que la quantité $V_{sol} \cdot (\alpha + \beta) \cdot 1/L$ est inférieure à une valeur prédéterminée R, R étant égal à 3 (R = 3), ou égal à 2.3 (R = 2.3), ou égal à 2 (R = 2). La longueur L correspond à la longueur de l'empreinte au sol suivant la direction de défilement de l'engin spatial. Pour une orbite circulaire donnée, la longueur de l'empreinte au sol varie avec l'incidence de la ligne de visée optique sur la surface de la Terre, et est minimale lorsque l'incidence est normale sur ladite surface de la Terre (pointage Nadir). La longueur L correspond à la longueur minimale de l'empreinte au sol, c'est-à-dire la longueur de l'empreinte au sol sous incidence normale (pointage Nadir). Toutefois, il est évidemment possible d'utiliser un pointage oblique lors des acquisitions et l'invention n'est pas limitée à l'utilisation d'un pointage Nadir. La longueur L sous incidence normale est considérée en tant que longueur de référence car, si l'inégalité $V_{sol} \cdot (\alpha + \beta) \cdot 1/L < R$ est vérifiée, l'inégalité $V_{sol} \cdot (\alpha + \beta) \cdot 1/L_{obl} < R$ est également vérifiée, $L_{obl}$ étant la longueur de l'empreinte au sol sous pointage oblique. Il est également à noter que l'invention n'est pas limitée à l'utilisation d'une orbite circulaire, et est applicable également à une orbite elliptique. Dans ce cas, la longueur L de référence (minimale) correspond à la longueur de l'empreinte au sol sous incidence normale lorsque le satellite se trouve au périgée de l'orbite elliptique. En outre, la vitesse de défilement au sol $V_{sol}$ considérée en tant que vitesse de défilement au sol référence (maximale) correspond à la vitesse de défilement au sol lorsque le satellite se trouve au périgée de l'orbite elliptique.

De préférence un pointage Nadir est utilisé puisqu'il donne la résolution maximale, mais rien n'empêche de faire un pointage oblique suivant la direction de défilement (en amont ou aval) et/ou transversalement à ladite direction de défilement (à gauche ou à droite). Des pointages obliques peuvent notamment être utilisés pour acquérir des images stéréo.

Grâce à de telles dispositions, le retard pris lors de l'observation de la partie $P_1$, par rapport au défilement de l'engin spatial et du fait de l'immobilisation de l'empreinte au sol, est limité et en partie rattrapé par une manoeuvre en tangage relativement rapide. Ainsi, au cours d'un même survol de la zone terrestre Z, il est possible de réaliser l'acquisition de plusieurs parties successives suivant la direction de défilement de l'engin spatial avec peu de retard et donc de réaliser l'acquisition de bandes de longueur élevée suivant ladite direction de défilement de l'engin spatial. Pour une orbite donnée et pour une durée $\alpha$ prédéterminée, les principaux paramètres permettant d'assurer que la quantité $V_{sol} \cdot (\alpha + \beta) \cdot 1/L$ est inférieure à R sont les suivants :

- durée $\beta$ de la modification d'attitude,
- longueur L de l'empreinte au sol.

La quantité $V_{sol} \cdot (\alpha + \beta) \cdot 1/L$ diminue lorsque la durée $\beta$ diminue. Pour réduire la durée $\beta$, il est possible d'augmenter le rapport $C_t/I_t$ entre la capacité Ct de formation de couple en tangage de l'engin spatial et l'inertie It en tangage dudit engin spatial. En effet, il est possible de démontrer que la durée $\beta$ vérifie l'expression suivante :

[Math. 1]

$$\beta \geq \sqrt{\frac{4 \cdot I_t \cdot \theta}{C_t}}$$

expression dans laquelle $\theta$ correspond à la variation d'attitude en tangage réalisée au cours de l'étape de modification d'attitude en tangage.

La quantité $V_{sol} \cdot (\alpha + \beta) \cdot 1/L$ diminue lorsque la longueur L augmente. Pour augmenter la longueur L, il est par exemple possible d'augmenter le nombre $N_p$ de cellules d'acquisition (pixels) de l'instrument d'observation suivant la direction de défilement.

Pour assurer que la quantité $V_{sol} \cdot (\alpha + P) \cdot 1/L$ est inférieure à R, le rapport $C_t/I_t$ et la longueur L (par exemple le nombre $N_p$) seront supérieurs aux rapports $C_t/I_t$ et/ou aux longueurs L généralement considérés dans les solutions de l'art antérieur.

Après l'étape de modification de l'attitude en tangage de l'engin spatial, le procédé d'acquisition comporte une étape d'observation de la partie $P_2$ de la zone terrestre Z. L'étape d'observation de la partie $P_2$ est de préférence conforme à l'étape d'observation de la partie $P_1$, c'est-à-dire que l'attitude de l'engin spatial peut être contrôlée pendant un intervalle temporel de sorte à immobiliser l'empreinte au sol sur la partie $P_2$ pendant toute la durée dudit intervalle temporel, et donc de sorte que l'empreinte au sol ne bouge pas pendant l'acquisition de ladite partie $P_2$. Le cas échéant, la durée de cet intervalle temporel, qui peut être égale à la durée $\alpha$, est supérieure à $R_s/V_{sol}$.

De préférence, toutes les étapes d'observation de parties de la zone terrestre Z sont conformes à l'étape d'observation de la partie $P_1$. Rien n'exclut cependant, suivant des exemples particuliers de mise en oeuvre, de considérer un procédé d'acquisition dans lequel les étapes d'observation ne sont pas toutes conformes à l'étape d'observation de la partie $P_1$.

Dans des modes particuliers de mise en oeuvre, le procédé d'acquisition peut comporter en outre l'une ou plusieurs des caractéristiques suivantes, prises isolément ou selon toutes les combinaisons techniquement possibles.

Dans des modes particuliers de mise en oeuvre, le procédé d'acquisition comporte, avant l'étape d'observation de la partie $P_1$ :

- une étape d'observation d'une partie $P_0$ de la zone terrestre Z, les parties $P_0$ et $P_1$ étant contigües ou se recouvrant au plus partiellement transversalement à la direction de défilement,
- une étape de modification de l'attitude en roulis de l'engin spatial de sorte à orienter le champ de vision de telle sorte que l'empreinte au sol correspond à la partie $P_1$.

Ainsi, le procédé d'acquisition comporte, avant l'étape d'observation de la partie $P_1$, une étape d'observation d'une partie $P_0$ de la zone terrestre Z. Les parties $P_0$ et $P_1$ sont par exemple contigües, c'est-à-dire qu'elles se touchent sans se recouvrir mutuellement, ou bien lesdites parties $P_0$ et $P_1$ se recouvrent au plus partiellement transversalement à la direction de défilement. Lorsque les parties $P_0$ et $P_1$ se recouvrent partiellement, la surface de recouvrement représente de préférence moins de 10% de la surface de l'empreinte au sol pour l'acquisition de la partie $P_0$, voire moins de 5% de ladite surface de l'empreinte au sol pour l'acquisition de ladite $P_0$. De préférence, les parties $P_0$ et $P_1$ se trouvent dans le prolongement l'une de l'autre, c'est-à-dire qu'elles ne sont pas décalées l'une par rapport à l'autre suivant la direction de défilement.

Dans des modes particuliers de mise en oeuvre, le procédé d'acquisition comporte, après l'étape d'observation de la partie $P_2$ :

- une étape de modification de l'attitude en roulis de l'engin spatial de sorte à orienter le champ de vision de telle sorte que l'empreinte au sol correspond à une partie $P_3$ de la zone terrestre Z, lesdites parties $P_3$ et $P_2$ étant contigües ou se recouvrant au plus partiellement transversalement à la direction de défilement, lesdites parties $P_0$ et $P_3$ étant contigües ou se recouvrant au plus partiellement suivant la direction de défilement,
- une étape d'observation de la $P_3$ de la zone terrestre Z,

Dans des modes particuliers de mise en oeuvre, la durée $\alpha$ est comprise entre 200 ms et 1s.

Dans des modes particuliers de mise en oeuvre, la durée $\beta$ est comprise entre 1s et 2s.

Dans des modes particuliers de mise en oeuvre, le procédé d'acquisition comporte, au cours de chaque étape d'observation d'une partie de la zone terrestre Z, une tranquillisation de l'attitude de l'engin spatial préalable à l'acquisition de l'image de la partie considérée.

Dans des modes particuliers de mise en oeuvre, la durée de la tranquillisation, comprise dans la durée $\alpha$, est comprise entre 100 ms et 800 ms.

Dans des modes particuliers de mise en oeuvre, la durée de tranquillisation $\alpha_t$ et la durée $\beta$ sont telles que

$$(\alpha_t + \beta) \geq 1.2 \times \sqrt{4 \cdot I_t \cdot \theta / C_t}.$$

Dans des modes particuliers de mise en oeuvre, la zone terrestre Z comporte au moins une bande de longueur supérieure à 5 km obtenue par l'acquisition d'images d'au moins trois parties agencées dans le prolongement l'une de l'autre dans la direction de défilement de l'engin spatial, les parties adjacentes dans la direction de défilement étant contigües ou se recouvrant au plus partiellement suivant la direction de défilement.

Dans des modes particuliers de mise en oeuvre, l'acquisition d'une image est effectuée en activant successivement des cellules d'acquisition ou des groupes de cellules d'acquisition de l'instrument d'observation.

Dans des modes particuliers de mise en oeuvre, le procédé d'acquisition d'images comporte, pendant la durée de la modification de l'attitude en tangage et/ou en roulis de l'engin spatial, une réalisation d'opérations de traitement d'une image acquise au cours d'une étape d'observation précédente. En effet, le temps nécessaire pour effectuer la modification d'attitude entre deux étapes d'observation successives peut être avantageusement utilisé pour effectuer un (pré)traitement à bord des images acquises, notamment une compression desdites images acquises, de sorte qu'elles soient prêtes à être transmises au sol.

Dans des modes particuliers de mise en oeuvre, la longueur L est supérieure à 500 m, voire supérieure à 2.5 km ou 5 km.

Selon un second aspect, il est proposé un engin spatial destiné à être placé en orbite défilante autour de la Terre suivant une direction défilement et avec une vitesse de défilement au sol $V_{sol}$. Ledit engin spatial est d'inertie en tangage It et comporte :

- des moyens de contrôle d'attitude ayant une capacité Ct de formation de couple en tangage correspondant à la valeur maximale que peut prendre un couple en tangage formé par lesdits moyens de contrôle d'attitude,
- un instrument d'observation associé à un champ de vision fixe en repère engin spatial, ledit instrument d'observation comportant un nombre $N_p$ de cellules d'acquisition (pixels) suivant la direction de défilement de l'engin spatial,

- un circuit de traitement configuré pour contrôler le fonctionnement de l'instrument d'observation et des moyens de contrôle d'attitude pour exécuter les étapes du procédé d'acquisition selon l'un quelconque des modes de mise en oeuvre de l'invention.

En outre, le nombre $N_p$ est supérieur à 1000, et le rapport Ct / It est supérieur à 0.01 s$^{-2}$. De préférence, le nombre $N_p$ est égal ou supérieur à 5000, voire égal ou supérieur à 10000.

Dans des modes particuliers de réalisation, l'engin spatial peut comporter en outre l'une ou plusieurs des caractéristiques suivantes, prises isolément ou selon toutes les combinaisons techniquement possibles.

Dans des modes particuliers de réalisation, la capacité Ct est supérieure à 0.8 N·m.

Dans des modes particuliers de réalisation, les moyens de contrôle d'attitude comportent au moins une roue à réaction récupératrice d'énergie électrique.

Dans des modes particuliers de réalisation, les moyens de contrôle d'attitude comportent au moins un actionneur gyroscopique.

Dans des modes particuliers de réalisation, l'instrument d'observation comporte au moins deux capteurs matriciels agencés transversalement à la direction de défilement et espacés d'une distance non nulle inférieure à la largeur de l'un au moins desdits deux capteurs matriciels mesurée transversalement à la direction de défilement.

Dans des modes particuliers de réalisation, l'instrument d'observation comporte un filtre de Bayer.

Dans des modes particuliers de réalisation, l'instrument d'observation est configuré pour activer successivement des cellules d'acquisition ou des groupes de cellules d'acquisition lors de l'acquisition d'une image.

## Présentation des figures

L'invention sera mieux comprise à la lecture de la description suivante, donnée à titre d'exemple nullement limitatif, et faite en se référant aux figures qui représentent :

- Figure 1 : une représentation schématique d'un engin spatial en orbite défilante autour de la Terre,
- Figure 2 : un diagramme illustrant les principales étapes d'un mode de mise en oeuvre d'un procédé d'acquisition,
- Figure 3 : un diagramme illustrant les principales étapes d'un autre mode de mise en oeuvre d'un procédé d'acquisition,
- Figure 4 : une représentation schématique d'exemples d'acquisitions successives de parties d'une zone terrestre,
- Figure 5 : une représentation schématique d'un satellite pour la mise en oeuvre d'un procédé d'acquisition,
- Figure 6 : une représentation schématique d'un exemple de réalisation de moyens d'acquisition d'un instrument d'observation,
- Figure 7 : une représentation schématique d'exemples d'acquisitions successives de parties d'une zone terrestre par les moyens d'acquisition de la figure 6,
- Figure 8 : une représentation schématique d'un capteur matriciel mettant en oeuvre un filtre de Bayer modifié,
- Figure 9 : une représentation, à l'échelle, d'une vue en coupe d'un exemple préféré de réalisation d'une optique de Korsch.

Dans ces figures, des références identiques d'une figure à une autre désignent des éléments identiques ou analogues. Pour des raisons de clarté, les éléments représentés ne sont pas à l'échelle, sauf mention contraire.

## Description des modes de réalisation

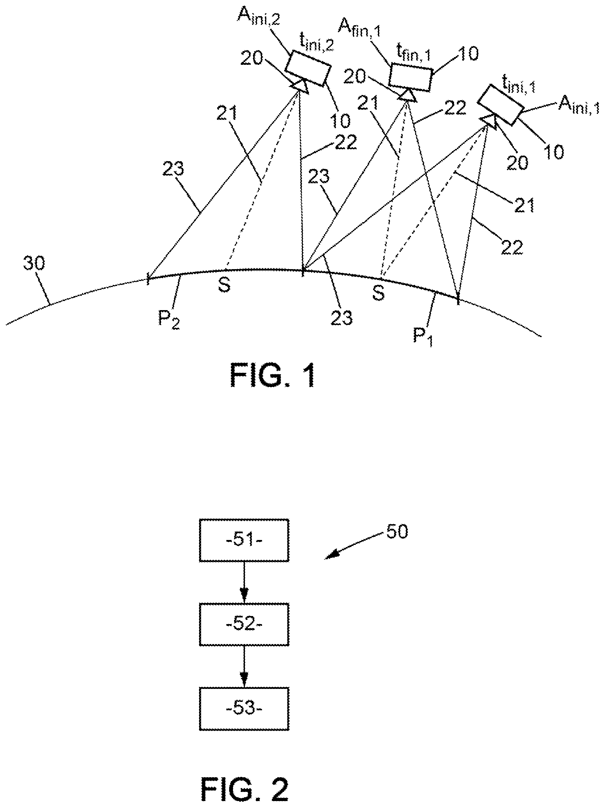

La figure 1 représente schématiquement un engin spatial en orbite défilante autour de la Terre 30. De préférence, l'engin spatial est placé sur une orbite circulaire, d'altitude de préférence inférieure à 2000 km, voire inférieure à 1000 km. Rien n'exclut cependant, suivant d'autres exemples, de considérer d'autres types d'orbites, notamment des orbites elliptiques.

Dans l'exemple illustré par la figure 1, l'engin spatial est un satellite 10. Rien n'exclut cependant, suivant d'autres exemples non détaillés, de considérer d'autres types d'engins spatiaux (navette spatiale, sonde, etc.).

Ledit satellite 10 défile sur son orbite circulaire autour de la Terre avec une vitesse de défilement au sol $V_{sol}$. Par exemple, le satellite 10 défile sur une orbite circulaire d'altitude sensiblement égale à 500 km avec une vitesse de défilement au sol sensiblement égale à 7 km.s$^{-1}$.

Le satellite 10 comporte un instrument d'observation 20 pour acquérir des images de parties de la surface de la Terre 30. La réunion de ces différentes parties forme une zone terrestre Z que le satellite 10 a pour mission d'imager, par exemple suite à une requête client transmise audit satellite 10 à partir d'une station au sol. Ainsi, les images acquises des différentes parties sont combinées pour former une image composite finale représentant l'ensemble de la zone terrestre Z à imager.

Par « acquisition » d'une partie de la surface de la Terre 30, on fait référence ici à la mesure, au cours d'un intervalle de temps de durée prédéterminée, d'un flux optique reçu de ladite partie de la surface de la Terre 30 par ledit instrument d'observation 20. Il convient de noter que, dans la présente description, l'expression « prise de vue » est considérée comme équivalente au terme « acquisition ».

L'instrument d'observation 20 comporte, de manière connue en soi, des moyens d'acquisition configurés pour capter le flux optique provenant de la surface de la Terre 30. Une fois capté, ce rayonnement est ensuite converti en données numériques formant les images acquises, qui sont mémorisées pour être transmises à une station sol. Lesdites images peuvent ensuite faire l'objet de différents traitements connus de l'homme de l'art, qui sortent du cadre de la présente invention.

Ledit instrument d'observation 20 est associé à une ligne de visée optique 21 fixe en repère satellite. Ladite ligne de visée optique 21 forme la partie sortant du chemin optique de l'instrument d'observation 20 et rencontre la surface de la Terre 30 en un point dit « point au sol » S. Par « fixe en repère satellite », on fait référence ici au fait que la ligne de visée optique 21 suit le mouvement du satellite 10 lorsque son attitude est modifiée, le pointage au sol de ladite ligne de visée optique 21 étant modifié en conséquence. Ainsi, si l'attitude du satellite 10 est modifiée de sorte à réaliser un pointage Nadir permanent de la ligne de visée, le point au sol S de la ligne de visée se déplace alors à la surface de la Terre 30 à une vitesse identique à la vitesse de défilement au sol $V_{sol}$ du satellite 10.

Ledit instrument d'observation 20 est également associé à un champ de vision fixe en repère satellite. Ce champ de vision fixe correspond à l'ouverture angulaire de l'instrument d'observation 20 et des cellules d'acquisition utilisées au plan focal. On note par ailleurs que par « fixe », on fait référence ici au fait que la ligne de visée optique 21 est fixe en repère satellite et qu'en outre l'ouverture angulaire est de taille invariable. Le champ de vision de l'instrument d'observation 20 forme une empreinte au sol de longueur L suivant la direction de défilement. Tel qu'indiqué précédemment, la longueur de l'empreinte au sol peut varier avec l'incidence de la ligne de visée optique 21 sur la surface de la Terre 30, et la longueur L correspond à la longueur minimale de ladite empreinte au sol, qui est obtenue avec un pointage Nadir de ladite ligne de visée optique 21. Cette longueur L obtenue avec un pointage Nadir est considérée en tant que longueur de référence (minimale) pour l'empreinte au sol. Toutefois, les acquisitions d'images ne sont pas nécessairement effectuées avec un pointage Nadir et peuvent être effectuées avec un pointage quelconque.

De plus, l'instrument d'observation 20 est associé à une résolution spatiale $R_s$ prédéterminée. De manière conventionnelle, la résolution spatiale correspond à la taille, par exemple en mètres, du plus petit objet qui peut être détecté dans une scène représentée par une image issue d'une acquisition effectuée par l'instrument d'observation 20. Aussi, plus la taille du plus petit objet détectable diminue, plus la résolution spatiale augmente. Par exemple, si la résolution spatiale est égale à 0.5 mètres (m), alors le plus petit élément de surface de la Terre 30 qu'un pixel du capteur peut représenter est d'aire 0.25 $m^2$. Rien n'exclut de considérer d'autres valeurs de résolution spatiale. De préférence, la résolution spatiale $R_s$ est inférieure à deux mètres (2 m), voire inférieure au mètre (1 m). Comme pour la longueur L, la résolution spatiale peut varier avec l'incidence de la ligne de visée optique 21 sur la surface de la Terre 30. La résolution spatiale $R_s$ correspond ici la résolution spatiale de l'instrument d'observation 20 obtenue avec un pointage Nadir (et au périgée de l'orbite dans le cas d'une orbite elliptique). La résolution spatiale $R_s$ est inférieure à la longueur L et est préférentiellement significativement inférieure à ladite longueur L, par exemple d'un facteur au moins 5000, voire au moins 10000.

Dans la suite de la description, on considère que la zone terrestre Z à acquérir est de taille T suivant la direction de défilement. On comprend alors que la zone terrestre Z fait référence à une surface courbe continue (du fait de la sphéricité de la Terre), c'est-à-dire d'un seul tenant suivant la direction défilement. Autrement dit, la présente description ne concerne pas le cas où la zone terrestre Z est une réunion de sous-zones terrestres disjointes suivant la direction de défilement. Toutefois, il convient de noter que rien n'empêche d'envisager l'acquisition d'une zone terrestre répondant à ces dernières caractéristiques, par exemple par application répétée du procédé d'acquisition à chacune des sous-zones disjointes composant alors ladite zone terrestre.

On considère également que, suivant la direction de défilement, la longueur L de l'empreinte au sol est inférieure à ladite taille T. De telles dispositions impliquent que plusieurs acquisitions (au moins deux) sont nécessaires pour que la zone terrestre Z soit entièrement acquise, puisque l'empreinte au sol ne permet pas d'acquérir une image représentant toute la zone terrestre Z. La zone terrestre Z est nécessairement la réunion d'au moins deux parties différentes, représentées par au moins deux images.

Dans la suite de la description, on désigne par $P_i$, i étant un nombre entier positif ou nul, une partie de la zone terrestre Z à acquérir par l'instrument d'observation 20. On adopte également la convention selon laquelle, si j est strictement supérieur à i, alors la partie $P_j$ est acquise par l'instrument d'observation 20 après la partie $P_i$.

La figure 2 représente schématiquement les principales étapes d'un procédé 50 d'acquisition, dans le cas d'une acquisition d'images de deux parties $P_1$ et $P_2$ de la zone terrestre Z, la partie $P_2$ étant située géographiquement en aval de ladite partie $P_1$ suivant la direction de défilement.

Tel qu'illustré par la figure 2, le procédé 50 d'acquisition comporte tout d'abord une étape 51 d'observation de la partie $P_1$ de la zone terrestre Z. Ladite étape d'observation est exécutée pendant un intervalle temporel de durée $\alpha$

supérieure à $R_s/V_{sol}$ (préférentiellement significativement supérieure à celle-ci, d'un facteur au moins 100, voire au moins 1000), et comporte une étape de contrôle de l'attitude du satellite 10 pendant ladite durée $\alpha$. Au cours de l'étape de contrôle d'attitude, l'attitude du satellite 10 est contrôlée de sorte que l'empreinte au sol du champ de vision est maintenue immobile pendant toute la durée $\alpha$ et correspond à ladite partie $P_1$. L'étape 51 d'observation de la partie $P_1$ comporte également une étape d'acquisition d'une image de la partie $P_1$ par l'instrument d'observation 20, qui est exécutée au cours de l'intervalle temporel de durée $\alpha$. En d'autres termes, l'étape de contrôle d'attitude est exécutée pendant toute la durée $\alpha$, et l'étape d'acquisition est exécutée au cours de l'intervalle temporel de durée $\alpha$, la durée $\alpha_a$ de l'étape d'acquisition étant égale ou inférieure à la durée $\alpha$.

Le procédé 50 d'acquisition comporte ensuite une étape 52 de modification de l'attitude en tangage du satellite 10 de sorte à orienter le champ de vision de telle sorte que l'empreinte au sol correspond à la partie $P_2$ de la zone terrestre Z. Les parties $P_1$ et $P_2$ de la zone terrestre Z sont contiguës suivant la direction de défilement ou elles se recouvrent au plus partiellement suivant ladite direction de défilement. L'étape 52 de modification d'attitude en tangage est exécutée au cours d'un intervalle temporel de durée $\beta$ telle que la quantité $V_{sol} \cdot (\alpha + \beta) \cdot 1/L$ est inférieure à une valeur prédéterminée R, R étant égal à 3 (R = 3), ou égal à 2.3 (R = 2.3), ou égal à 2 (R = 2).

Tel qu'illustré par la figure 2, le procédé 50 d'acquisition comporte ensuite une étape 53 d'observation de la partie $P_2$ de la zone terrestre Z.

La figure 1 représente schématiquement le satellite 10 en train d'acquérir les parties $P_1$ et $P_2$ de la zone terrestre Z, et correspond à une vue simplifiée en deux dimensions résultant de l'intersection entre la Terre et un plan de l'orbite dudit satellite 10.

L'exemple de la figure 1 est donné à titre nullement limitatif, afin d'illustrer le fonctionnement du procédé 50 d'acquisition de la figure 2. Dans cet exemple, les parties $P_1$ et $P_2$ sont contiguës, c'est-à-dire qu'elles se touchent sans se recouvrir mutuellement. Rien n'exclut cependant, suivant d'autres exemples, d'avoir un recouvrement partiel entre lesdites parties $P_1$ et $P_2$. Le cas échant, la surface de recouvrement représente de préférence moins de 10% de la surface de l'empreinte au sol pour l'acquisition de la partie $P_1$, voire moins de 5% de ladite surface de l'empreinte au sol pour l'acquisition de ladite partie $P_1$.

Le champ de vision fixe de l'instrument d'observation 20 est représenté dans la figure 1 par un cône délimité par deux côtés 22, 23 issus dudit satellite 10. Ces deux côtés 22, 23 délimitent à chaque instant une empreinte au sol sur la surface de la Terre 30, dont la longueur au sol est sensiblement égale à L.

La ligne de visée optique 21 est quant à elle représentée dans la figure 1 au moyen d'une ligne en trait discontinu issue du satellite 10 et intersectant la surface de la Terre 30 en un point au sol S.

Tel qu'indiqué ci-dessus, au cours de l'étape 51 d'observation de la partie $P_1$, l'attitude du satellite 10 est contrôlée de sorte que l'empreinte au sol est maintenue immobile pendant toute la durée $\alpha$, qui est supérieure à $R_s/V_{sol}$.

Il convient de noter que, dans la mesure où le satellite 10 suit une orbite défilante et où la ligne de visée optique 21 est fixe en repère satellite, l'empreinte au sol, sauf contrôle d'attitude spécifique, devrait en principe défiler avec le satellite 10. Le contrôle d'attitude effectué au cours de l'étape 51 d'observation de la partie $P_1$ vise notamment à empêcher le défilement de l'empreinte au sol.

L'exemple de la figure 1 permet d'illustrer le fonctionnement du contrôle d'attitude effectué au cours de l'étape 51 d'observation de la partie $P_1$. Dans l'exemple illustré par la figure 1, le satellite 10 est représenté trois fois sur son orbite :

- une première fois dans une attitude $A_{ini,1}$, au début de l'étape 51 d'observation de la partie $P_1$, c'est-à-dire au début de l'intervalle temporel de durée $\alpha$ à un instant $t_{ini,1}$,
- une seconde fois dans une attitude $A_{fin,1}$, à la fin de l'étape 51 d'observation de la partie $P_1$, c'est-à-dire à la fin de l'intervalle temporel de durée $\alpha$ à un instant $t_{fin,1}$ ($t_{fin,1} = t_{ini,1} + \alpha$),
- une troisième fois dans une attitude notée $A_{ini,2}$, au début de l'étape 53 d'observation de la partie $P_2$, à un instant $t_{ini,2}$ ($t_{ini,2} = t_{fin,1} + \beta$).

Dans l'attitude $A_{ini,1}$, la ligne de visée optique 21 est orientée pour que le point au sol S associé corresponde au positionnement de la partie $P_1$ tel que décrit ci-avant. Tel qu'illustré par la figure 1, l'attitude $A_{fin,1}$ est différente en tangage de l'attitude $A_{ini,1}$. On note cependant que, bien que les directions respectives de la ligne de visée optique 21 diffèrent selon que l'attitude du satellite 10 correspond à $A_{ini,1}$ ou bien à $A_{fin,1}$, le point au sol S ne s'est quant à lui pas déplacé au cours de l'intervalle temporel de durée $\alpha$ (entre l'instant $t_{ini,1}$ et l'instant $t_{fin,1}$), du fait du contrôle d'attitude qui maintient immobile l'empreinte au sol pendant la durée de l'étape 51 d'observation de la partie $P_1$.

De telles dispositions sont particulièrement avantageuses. En effet, le fait que l'empreinte au sol reste immobile pendant la durée $\alpha$ permet d'éviter tout effet de filé. Par ailleurs, si la durée $\alpha_a$ de l'acquisition est également supérieure à $R_s/V_{sol}$, alors cela permet de réaliser une acquisition présentant un bon rapport signal sur bruit. Par exemple, le rapport $R_s/V_{sol}$ est sensiblement égal à 70 microsecondes ($\mu s$). Préférentiellement, la durée $\alpha$ est comprise entre 200 millisecondes (ms) et 1 seconde (s). La durée $\alpha_a$ est égale ou inférieure à la durée $\alpha$, par exemple inférieure à 200 ms. Il convient de noter que les techniques d'acquisition de type balayage connues ne permettent pas d'éviter l'effet de filé

pour une durée $\alpha_a$ d'acquisition telle que celle mise en oeuvre au cours de l'étape 51 d'observation de la partie $P_1$.

Si l'attitude du satellite 10 n'était pas modifiée à l'issue de l'étape 51 d'observation de la partie $P_1$, la direction de la ligne de visée optique 21 resterait sensiblement parallèle à la direction présentée en fin d'acquisition de ladite partie $P_1$. Or, conserver cette dernière direction de la ligne de visée optique 21 retarderait l'acquisition de la partie $P_2$, car il faudrait alors attendre que le satellite 10 se déplace suffisamment sur son orbite pour que l'empreinte au sol corresponde à ladite partie $P_2$.

L'étape 52 de modification d'attitude en tangage du satellite 10 vise précisément à orienter, immédiatement après avoir terminé l'étape 51 d'observation de la partie $P_1$, le satellite 10 de sorte que l'empreinte au sol corresponde à ladite partie $P_2$. En outre, l'étape 52 de modification d'attitude en tangage est exécutée au cours d'un intervalle temporel de durée $\beta$, consécutif à l'intervalle temporel de durée $\alpha$, de sorte que la quantité $V_{sol} \cdot (\alpha + \beta) \cdot 1/L$ est inférieure à R.

L'objectif visé dans l'étape 52 de modification d'attitude en tangage est donc de placer le plus rapidement possible l'empreinte au sol sur la partie $P_2$, afin de pouvoir commencer au plus tôt l'observation de ladite partie $P_2$. Cette modification d'attitude doit de préférence être effectuée suffisamment rapidement pour compenser en partie le temps passé à observer la partie $P_1$, et donc ne pas compromettre la réalisation de la mission d'observation. Par « compromettre la réalisation de la mission d'observation », on fait référence ici au fait de ne pas être en mesure de réaliser autant d'acquisitions que souhaité, et donc *in fine* de ne pas pouvoir imager la zone terrestre Z dans sa globalité.

Pour la suite de la description, on introduit la notion de retard relatif comme étant le rapport entre la distance, ramenée au sol, parcourue par le satellite 10 entre le début de l'observation de la partie $P_1$ et le début de l'observation de la partie $P_2$, et la longueur L. On note que ledit retard relatif correspond précisément à la quantité $V_{sol} \cdot (\alpha + \beta) \cdot 1/L$. Par conséquent, la notion de retard relatif vise à quantifier un retard du satellite 10 sur son orbite en prenant en compte non seulement la durée $\alpha$ d'observation mais également la durée $\beta$ nécessaire aux manoeuvres de modification du pointage. De manière équivalente, la notion de retard relatif permet de quantifier la part utile de la mission consacrée à l'observation de la partie $P_1$ au regard de la part non utile de la mission consacrée, avant le début de l'observation de la partie $P_2$, aux manoeuvres nécessaires pour modifier l'attitude du satellite 10 en vue de l'acquisition prochaine de ladite partie $P_2$.

On comprend alors qu'une valeur de retard relatif strictement supérieure à 1 indique que le satellite 10 prend du retard sur l'ensemble de la durée nécessaire à l'exécution des étapes 51 d'observation de la partie $P_1$ et 52 de modification d'attitude en tangage. Un tel retard est par exemple lié au fait qu'une fois l'étape 51 d'observation de la partie $P_1$ exécutée pendant une durée $\alpha$ suffisamment longue, la durée $\beta$ de modification d'attitude en tangage pendant l'étape 52 n'est quant à elle pas suffisamment courte pour compenser le temps consacré à l'étape 51 d'observation de la partie $P_1$. Dans le cas présent, le retard relatif est inférieur à R. Bien que cette valeur soit supérieure à 1, elle est suffisamment faible pour ne pas compromettre la mission d'observation, puisqu'il est néanmoins possible d'acquérir plusieurs parties successives suivant la direction de défilement. Dans le cas où l'on souhaite acquérir une zone terrestre Z comportant au moins une bande de longueur très importante, typiquement de l'ordre de plusieurs centaines de kilomètres, la quantité $V_{sol} \cdot (\alpha + \beta) \cdot 1/L$ est par exemple inférieure à 2.3, voire inférieure à 2.

L'étape 53 d'observation de la partie $P_2$ est de préférence exécutée immédiatement après l'étape 52 de modification d'attitude en tangage. Tel qu'indiqué ci-dessus, l'étape 53 d'observation de la partie $P_2$ est par exemple conforme à l'étape 51 d'observation de la partie $P_1$, c'est-à-dire que l'attitude du satellite 10 est contrôlée pendant un intervalle temporel de sorte à immobiliser l'empreinte au sol sur la partie $P_2$ pendant toute la durée dudit intervalle temporel. La durée de cet intervalle temporel, pendant lequel l'étape 53 d'observation de la partie $P_2$ est exécutée, peut être égale à la durée $\alpha$. Rien n'exclut cependant de considérer, pour l'observation de parties $P_i$ différentes, des durées $\alpha_i$ respectives qui ne sont pas toutes identiques. Le cas échéant, la durée $\alpha$ utilisée dans la quantité $V_{sol} \cdot (\alpha + \beta) \cdot 1/L$ correspond à une durée de référence, qui peut être égale à la valeur maximale des durées $\alpha_i$.

De manière plus générale, la zone terrestre Z peut être constituée par un nombre N de parties $P_i$ à acquérir, N étant égal ou supérieur à deux. Ainsi, le procédé 50 d'acquisition comporte N étapes d'observation qui peuvent par exemple être toutes conformes à l'étape 51 d'observation de la partie $P_1$ décrite ci-dessus. Si toutes les parties $P_i$ sont agencées de sorte que, quelle que soit la valeur de i, la partie $P_{i+1}$ est toujours située en aval de la partie $P_i$ suivant la direction de défilement, alors le procédé 50 d'acquisition peut comporter (N-1) étapes de modification d'attitude en tangage pour déplacer l'empreinte au sol de la partie $P_i$ vers la partie $P_{i+1}$ suivante. Il est possible de considérer la même durée $\beta$ pour toutes les étapes de modification d'attitude en tangage. Rien n'exclut cependant de considérer des durées $\beta_i$ respectives qui ne sont pas toutes identiques. Le cas échéant, la durée $\beta$ utilisée dans la quantité $V_{sol} \cdot (\alpha + \beta) \cdot 1/L$ correspond à une durée de référence, qui peut être égale à la durée nécessaire pour appliquer la variation d'attitude en tangage maximale $\theta_{max}$ pour déplacer l'empreinte au sol d'une partie $P_i$ vers une partie $P_{i+1}$ suivante. Par exemple, la durée $\beta$ est comprise entre 1 s et 2 s.

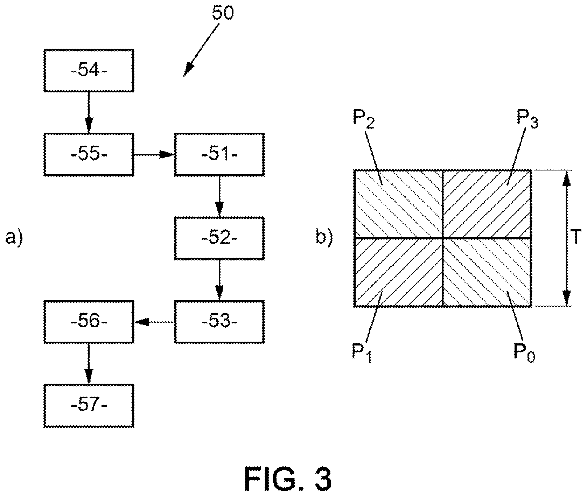

La figure 3 représente schématiquement un mode particulier de mise en oeuvre du procédé 50 d'acquisition, dans le cas d'une acquisition d'images de quatre parties $P_0$ à $P_3$ de la zone terrestre Z, lesdites parties $P_0$ à $P_3$ étant agencées de sorte que la partie $P_{i+1}$ n'est pas nécessairement située géographiquement en aval de la partie $P_i$ suivant la direction de défilement. Plus particulièrement, la partie a) de la figure 3 représente schématiquement les principales étapes de ce mode particulier de mise en oeuvre, tandis que la partie b) représente schématiquement l'agencement des parties $P_0$ à $P_3$.

Pour l'observation de la partie $P_0$, le procédé 50 d'acquisition comporte :

- une étape 54 d'observation de la partie $P_0$ de la zone terrestre Z, les parties $P_0$ et $P_1$ étant contigües ou se recouvrant au plus partiellement transversalement à la direction de défilement (voir la partie b) de la figure 3),
- une étape 55 de modification de l'attitude en roulis du satellite 10 de sorte à orienter le champ de vision de telle sorte que l'empreinte au sol correspond à la partie $P_1$.

Le procédé 50 d'acquisition reprend ensuite les étapes 51 d'observation, 52 de modification de l'attitude en tangage, et 53 d'observation décrites en référence à la figure 2, qui sont appliquées aux parties $P_1$ et $P_2$ de la zone terrestre Z, qui sont contigües ou se recouvrent au plus partiellement suivant la direction de défilement.

Pour l'observation de la partie $P_3$, le procédé 50 d'acquisition comporte, après l'étape 53 d'observation de la partie $P_2$ :

- une étape 56 de modification de l'attitude en roulis du satellite 10 de sorte à orienter le champ de vision de telle sorte que l'empreinte au sol correspond à une partie $P_3$ de la zone terrestre Z, lesdites parties $P_3$ et $P_2$ étant contigües ou se recouvrant au plus partiellement transversalement à la direction de défilement, lesdites parties $P_0$ et $P_3$ étant contigües ou se recouvrant au plus partiellement suivant la direction de défilement (voir la partie b) de la figure 3),
- une étape 57 d'observation de la $P_3$ de la zone terrestre Z.

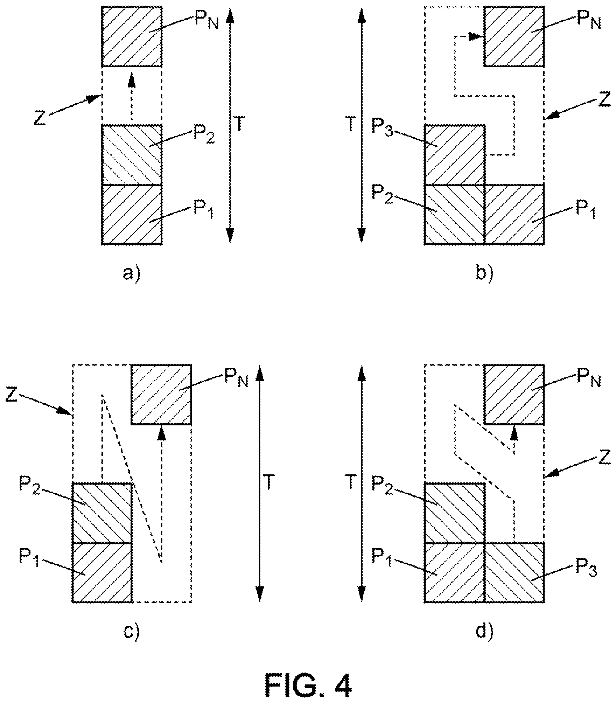

La figure 4 représente schématiquement des exemples de répartitions géographiques possibles de parties $P_1$ à $P_N$ à acquérir l'intérieur d'une zone terrestre Z.

La partie a) de la figure 4 représente schématiquement un exemple dans lequel les parties $P_i$ sont agencées de sorte que, quelle que soit la valeur de i, la partie $P_{i+1}$ est toujours située en aval de la partie $P_i$ suivant la direction de défilement. Dans cet exemple nullement limitatif, la partie $P_{i+1}$ est contigüe de la partie $P_i$ quelle que soit la valeur de i, et est en outre agencée dans le prolongement de ladite partie $P_i$. Tel qu'indiqué précédemment, il est également possible de prévoir un recouvrement partiel entre des parties $P_{i+1}$ et $P_i$ par exemple un recouvrement inférieur à 10% voire inférieur à 5%. Un tel recouvrement permet notamment de faciliter le recalage des différentes images entre elles. Par « recalage », on fait référence ici au fait d'aligner en cohérence lesdites parties $P_i$ et $P_{i+1}$ lors de la reconstruction de l'image composite de la zone terrestre Z. Les techniques de traitement d'image employées pour la mise en oeuvre d'un tel recalage de deux images sont connues de l'homme de l'art.

La partie b) de la figure 4 représente schématiquement un exemple dans lequel la partie $P_{i+1}$ n'est pas nécessairement située géographiquement en aval de la partie $P_i$ suivant la direction de défilement, et dans lequel les parties $P_i$ sont acquises en mettant en oeuvre le procédé 50 d'acquisition illustré par la figure 3. Dans cet exemple nullement limitatif, la partie $P_2$ est contigüe de la partie $P_1$ transversalement à la direction de défilement, et est en outre agencée dans le prolongement de ladite partie $P_1$. La partie $P_3$ est contigüe de la partie $P_2$ suivant la direction de défilement, et est en outre agencée dans le prolongement de ladite partie $P_2$. La partie $P_4$ est contigüe de la partie $P_3$ transversalement à la direction de défilement, et est en outre agencée dans le prolongement de ladite partie $P_1$. La partie $P_4$ est également contigüe de la partie $P_1$ suivant la direction de défilement, et est en outre agencée dans le prolongement de ladite partie $P_1$. Tel qu'indiqué précédemment, il est également possible de prévoir un recouvrement partiel entre des parties $P_{i+1}$ et $P_i$.

Les parties c) et d) de la figure 4 représentent schématiquement d'autres exemples de répartitions géographiques possibles des parties $P_1$ à $P_N$ à acquérir l'intérieur de la zone terrestre Z, dans lesquels la partie $P_{i+1}$ n'est pas nécessairement située géographiquement en aval de la partie $P_i$ suivant la direction de défilement.

Dans des modes préférés de mise en oeuvre, chaque étape d'observation qui suit une étape de modification d'attitude en tangage comporte une tranquillisation de l'attitude du satellite 10 préalable à l'acquisition de l'image de la partie considérée.

En effet, la modification d'attitude en tangage du satellite 10, exécutée de préférence de manière très rapide, est susceptible de créer des vibrations résiduelles dudit satellite 10, et par conséquent également de la ligne de visée optique 21 de l'instrument d'observation 20. En outre, les mesures ou estimations de l'attitude du satellite 10, immédiatement après une étape de modification d'attitude en tangage, peuvent être très bruitées. Par conséquent, dans un tel cas, il n'est pas possible d'acquérir l'image de la partie considérée au tout début de l'étape d'observation de cette partie, et il convient au préalable de tranquilliser l'attitude dudit satellite 10 avant de réaliser l'acquisition. La durée de la tranquillisation, comprise dans la durée $\alpha$ tout comme et avant la durée $\alpha_a$ d'acquisition, est par exemple comprise entre 100 ms et 800 ms. De préférence, la durée de tranquillisation $\alpha_t$ (comprise dans la durée $\alpha$) et la durée $\beta$ sont telles que

$$(\alpha_t + \beta) \geq 1.2 \times \sqrt{4 \cdot I_t \cdot \theta / C_t}$$ . Il est à noter qu'il est également possible de prévoir une telle tranquillisation de l'attitude lors des étapes d'observation qui suivent des étapes de modification d'attitude en roulis.

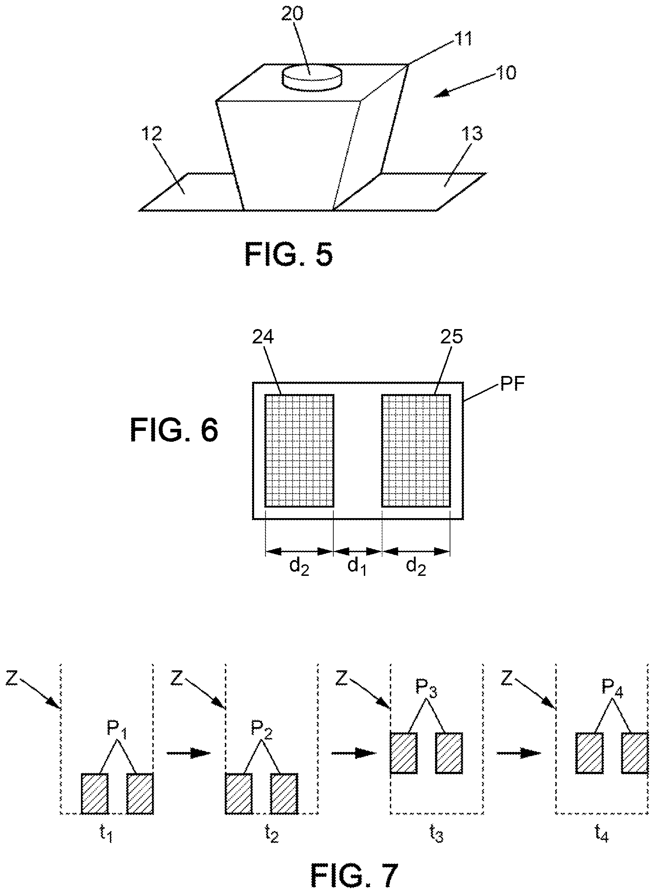

La figure 5 représente schématiquement un exemple de réalisation d'un satellite 10 pour la mise en oeuvre du procédé 50 d'acquisition.

Tel qu'illustré par la figure 5, le satellite 10 comporte deux générateurs solaires 12, 13 agencés sur des faces respectives opposées d'un corps 11 dudit satellite 10. L'instrument d'observation 20 est agencé sur une face reliant lesdites faces portant les générateurs solaires 12, 13.

Le satellite 10 comporte également des moyens de contrôle d'attitude (non représentés sur les figures), tels que des actionneurs inertiels. Lesdits moyens de contrôle d'attitude présentent une capacité $C_t$ de formation de couple en tangage. En d'autres termes, $C_t$ correspond à la valeur maximale que peut prendre un couple en tangage formé par les moyens de contrôle d'attitude du satellite 10.

En outre, l'inertie en tangage du satellite 10 est désignée It.

Le satellite 10 comporte en outre un circuit de traitement (non représenté sur les figures), qui contrôle le fonctionnement de l'instrument d'observation 20 et des moyens de contrôle d'attitude.

Le circuit de traitement comporte par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en oeuvre les différentes étapes du procédé 50 d'acquisition. Alternativement ou en complément, le circuit de traitement comporte un ou des circuits logiques programmables (FPGA, PLD, etc.), et/ou un ou des circuits intégrés spécialisés (ASIC, etc.), et/ou un ensemble de composants électroniques discrets, etc., adaptés à effectuer tout ou partie desdites étapes du procédé 50 d'acquisition.

En d'autres termes, le circuit de traitement correspond à des moyens configurés de façon logicielle (produit programme d'ordinateur spécifique) et/ou matérielle (FPGA, PLD, ASIC, composants électroniques discrets, etc.) pour effectuer tout ou partie des étapes du procédé 50 d'acquisition, par un contrôle adapté de l'instrument d'observation 20 et des moyens de contrôle d'attitude.

Il est à noter que le satellite 10 peut également comporter, de manière conventionnelle, d'autres éléments tels que des capteurs (senseur stellaire, gyromètre, etc.), qui peuvent être également reliés au circuit de traitement et qui sortent du cadre de la présente invention.

Tel qu'indiqué précédemment, pour une orbite circulaire (ou elliptique) donnée et pour une durée α prédéterminée suffisamment longue pour une prise de vue de qualité suffisante en termes de durée $\alpha_a$ d'acquisition (SNR) et de durée de tranquillisation, les principaux paramètres permettant d'assurer que la quantité $V_{sol} \cdot (\alpha + \beta) \cdot 1/L$ est inférieure à R sont principalement la longueur L de l'empreinte au sol et le rapport $C_t/I_t$. En particulier, la quantité $V_{sol} \cdot (\alpha + \beta) \cdot 1/L$ diminue lorsque le rapport $C_t/I_t$ augmente et/ou lorsque la longueur L augmente.

En considérant que l'instrument d'observation 20 comporte $N_p$ cellules d'acquisition (pixels) suivant la direction de défilement, alors le nombre $N_p$ est avantageusement supérieur à 1000, voire supérieur à 5000 ou 10000. Si l'on considère une résolution spatiale $R_s$ de l'ordre de 0.5 m, alors cela correspond à une longueur L supérieure à 500 m, voire supérieure à 2.5 km ou 5 km.

En outre, le rapport $C_t/I_t$ est avantageusement supérieur à 0.01 s$^{-2}$, voire supérieur à 0.018 s$^{-2}$. Par exemple, la capacité Ct de formation de couple en tangage est supérieure à 0.8 Newton mètre (N·m) et l'inertie en tangage $I_t$ est inférieure à 80 kg·m$^2$. Dans des modes préférés de réalisation, la capacité Ct de formation couple en tangage est supérieure à 1 N·m et l'inertie en tangage $I_t$ est inférieure à 60 kg·m$^2$.

Grâce à de telles dispositions, à savoir un satellite 10 présentant un rapport $C_t/I_t$ élevé et un instrument d'observation 20 présentant une empreinte au sol de longueur L élevée, il est possible d'avoir des durées $\alpha_a$ d'acquisition d'images suffisamment grandes pour la qualité de prise de vue, tout en compensant le retard pris par des manoeuvres rapides entre observations successives. En particulier, il est possible d'acquérir une zone terrestre Z comportant au moins une bande de longueur supérieure à 10 km, voire supérieure à 100 km, obtenue par l'acquisition d'images d'au moins 3 parties, voire beaucoup plus, agencées dans le prolongement l'une de l'autre dans la direction de défilement de l'engin spatial.

Dans des modes préférés de réalisation, les moyens de contrôle d'attitude comportent au moins une roue à réaction récupératrice d'énergie électrique. De préférence, tous les actionneurs inertiels mis en oeuvre lors de l'étape 52 de modification d'attitude en tangage sont des roues à réaction récupératrices d'énergie électrique. De telles roues à réaction récupératrices d'énergie électrique sont par exemple connues de la demande de brevet EP 2247505 A1.

L'utilisation de roues à réaction récupératrices d'énergie électrique est particulièrement avantageuse pour les raisons suivantes. Tout d'abord, il convient de noter que, pour fournir une capacité de couple en tangage élevée (supérieure à 0.8 N·m voire supérieure à 1 N·m) au moyen de roues à réaction, il est nécessaire d'utiliser des roues à réaction assez massives, ce qui tend à augmenter l'inertie en tangage It du satellite 10. Toutefois, avec des roues à réaction récupératrices d'énergie électrique, en particulier telles que décrites dans la demande de brevet EP 2247505 A1, il est possible de réduire la masse requise, à capacité de couple équivalent, par rapport aux roues à réaction non récupératrices d'énergie électrique. En outre, du fait que les roues à réaction sont récupératrices d'énergie électrique, les besoins en énergie électrique du satellite 10 sont réduits. Il est notamment possible de réduire les dimensions et la masse des générateurs solaires 12, 13, ce qui permet de réduire l'inertie en tangage $I_t$ du satellite 10. Ainsi, l'augmentation en masse éventuellement nécessaire pour avoir une capacité de couple en tangage importante (bien que moindre avec des roues à réaction récupératrices d'énergie électrique qu'avec des roues à réaction non récupératrices d'énergie électrique) peut être compensée au moins en partie par une réduction correspondante de la masse et des dimensions des générateurs solaires 12, 13.

Dans des modes particuliers de réalisation, les moyens de contrôle d'attitude comportent au moins un actionneur gyroscopique (« Control Moment Gyroscope » ou CMG dans la littérature anglo-saxonne). De préférence, tous les actionneurs inertiels mis en oeuvre lors de l'étape 52 de modification d'attitude en tangage sont des actionneurs gyroscopiques. Il est cependant possible de combiner différents types d'actionneurs inertiels, comme par exemple des actionneurs gyroscopiques et des roues à réaction.

L'utilisation d'actionneurs gyroscopiques est particulièrement avantageuse du fait que ceux-ci présentent un rapport (capacité en couple / masse) élevé. Ainsi, il est possible d'avoir une capacité de couple en tangage élevée sans pénaliser l'inertie en tangage It du satellite 10

Tel qu'indiqué précédemment, l'instrument d'observation 20 comporte des moyens d'acquisition. Dans des modes préférés de réalisation, les moyens d'acquisition de l'instrument d'observation 20 comportent au moins un capteur matriciel. Le capteur matriciel est par exemple de type CMOS (acronyme de l'expression anglo-saxonne « Complementary Metal-Oxyde-Semiconductor »). Il est à noter que l'instrument d'observation 20 peut comporter plusieurs capteurs matriciels.

Par exemple, plusieurs capteurs matriciels peuvent être mis en oeuvre pour acquérir des images dans des longueurs d'ondes respectives différentes (rouge, vert, bleu, proche infrarouge, etc.).

Suivant un autre exemple, plusieurs capteurs matriciels peuvent être mis en oeuvre pour augmenter les dimensions de l'empreinte au sol de l'instrument d'observation 20 en limitant la complexité des capteurs matriciels. La figure 6 représente schématiquement un mode préféré de réalisation des moyens d'acquisition de l'instrument d'observation 20, dans lequel lesdits moyens d'acquisition comportent, au niveau d'un plan focal PF, au moins deux capteurs matriciels 24, 25 agencés transversalement à la direction de défilement et espacés d'une distance $d_1$ non nulle inférieure à la largeur de l'un au moins desdits deux capteurs matriciels 24, 25 mesurée transversalement à la direction de défilement. Dans l'exemple illustré par la figure 6, les deux capteurs matriciels 24, 25 ont la même largeur $d_2$ et peuvent être identiques. De telles dispositions sont particulièrement avantageuses lors de mise en oeuvre du procédé 50 d'acquisition de la figure 3, car il est alors possible d'effectuer l'acquisition d'une zone terrestre large tout en limitant les variations d'attitude en roulis nécessaires pour acquérir des parties adjacentes transversalement à la direction de défilement du satellite 10. La figure 7 représente schématiquement l'empreinte au sol de l'instrument d'observation 20 de la figure 6, à des instants $t_1$, $t_2$, $t_3$ et $t_4$ successifs d'acquisition de parties $P_1$, $P_2$, $P_3$ et $P_4$ d'une zone terrestre Z. Dans l'exemple illustré par la figure 6, chacune des parties $P_1$, $P_2$, $P_3$ et $P_4$ est constituée par deux sous-parties disjointes.

Dans des modes préférés de réalisation, l'instrument d'observation 20 comporte un filtre de Bayer. Un filtre de Bayer, de manière connue en soi, permet d'acquérir des images en couleur dans des longueurs d'ondes respectives différentes rouge, vert et bleu (« Red, Green, Blue » ou RGB dans la littérature anglo-saxonne) avec un même capteur matriciel. De telles dispositions permettent de simplifier l'instrument d'observation 20.

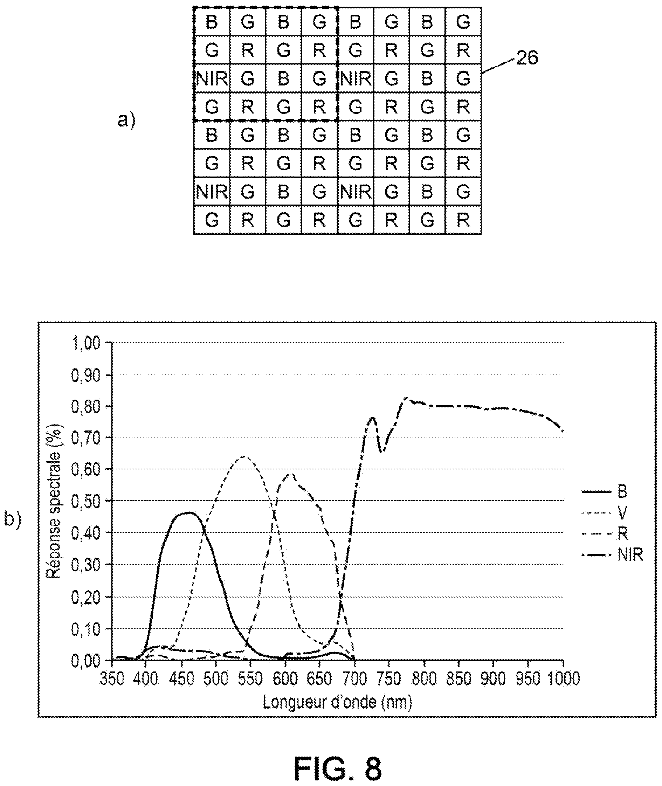

Dans certains modes de réalisation, il est possible de modifier le filtre de Bayer pour y inclure du proche infrarouge. Un exemple d'un tel filtre modifié est présenté de manière schématique sur la figure 8. Plus particulièrement, la partie a) de la figure 8 représente un capteur matriciel 26 comportant plusieurs jeux de cellules d'acquisition, sensibles respectivement dans les longueurs d'ondes rouge (désignées par R sur la figure 8), vert (G), bleu (B) et proche infrarouge (NIR). Dans cet exemple, le capteur matriciel 26 comporte $16 \times 16$ cellules d'acquisition, et peut être étendu à un nombre plus grand de cellules d'acquisition en répétant par exemple le motif de $4 \times 4$ cellules d'acquisition se trouvant dans la partie supérieure gauche (entouré par un trait discontinu). La partie b) de la figure 8 représente les réponses spectrales des différents filtres associées respectivement aux longueurs d'ondes rouge (R), vert (G), bleu (B) et proche infrarouge (NIR). Il est également possible, suivant d'autres exemples, d'avoir plusieurs plans focaux, dont un plan focal avec un capteur matriciel et un filtre de Bayer classique (formant une matrice de Bayer) et un autre plan focal avec au moins un autre capteur matriciel et un autre filtre, par exemple en proche infrarouge. Enfin, rien n'empêche d'éclater le plan focal suivant des filtres respectifs adaptés à une mission particulière ou à utiliser un plan focal unique sans filtre.

Dans des modes préférés de réalisation, l'instrument d'observation 20 est configuré pour activer successivement des cellules d'acquisition lors de l'acquisition d'une image. Un tel mode d'acquisition est connu sous le nom de « rolling shutter acquisition mode » dans la littérature anglo-saxonne. De telles dispositions, particulièrement adaptées aux très grands capteurs matriciels, permettent de limiter la quantité de données devant être traitées simultanément par l'instrument d'observation 20, puisque les cellules d'acquisition ne sont pas toutes activées simultanément. En effet, des cellules d'acquisition différentes, ou des groupes de cellules d'acquisition différents, sont activés successivement. Bien que cela augmente la durée nécessaire pour effectuer l'acquisition complète de chaque partie, cela est possible dans le cas présent grâce notamment aux manoeuvres rapides en tangage, qui permettent de rattraper le retard pris lors des acquisitions.

Outre les moyens d'acquisition, l'instrument d'observation 20 peut comporter d'autres éléments, comme par exemple une optique comportant un ou plusieurs miroirs, une ou plusieurs lentilles, une structure de support, des composants électroniques, etc.

Dans des modes préférés de réalisation, l'optique est de type Korsch, ce qui permet d'avoir à la fois une grande compacité et une faible masse, avec une focale élevée.

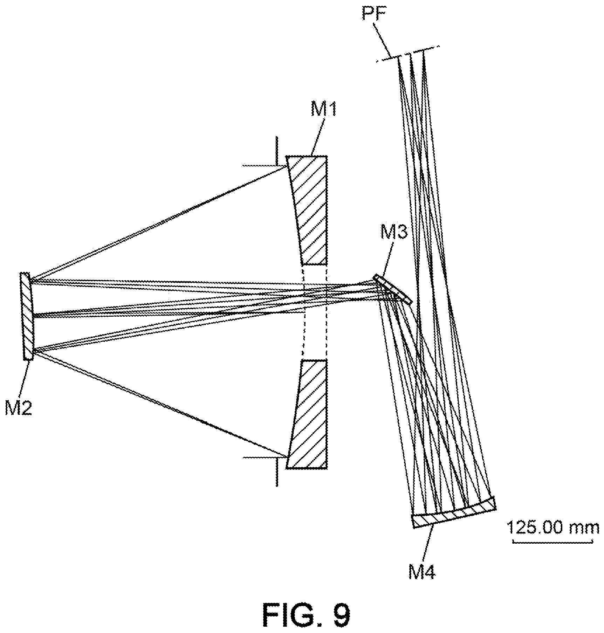

La figure 9 représente, à l'échelle, une vue en coupe d'un exemple de réalisation d'une optique de Korsch, selon un arrangement préféré permettant d'avoir une optique particulièrement compacte. Tel qu'illustré par la figure 9, l'optique de Korsch comporte un miroir M1 de 480 mm, un miroir M2 de 160 mm, un miroir de repli M3 et un miroir M4. Le flux optique incident est donc successivement réfléchi par le miroir M1, le miroir M2 (à travers le miroir M1), le miroir de repli M3 et le miroir M4, jusqu'à atteindre le plan focal PF de l'instrument d'observation 20.

Avec une telle optique de Korsch, il peut être conçu un instrument d'observation d'environ 80 kg, embarqué dans un satellite d'environ 300 kg. Le plan focal peut comporter par exemple deux capteurs matriciels arrangés comme décrit en référence à la figure 6, espacés de 45 mm (d1 = 45 mm), chaque capteur matriciel comportant $14192 \times 10140$ cellules d'acquisition (pixels), par exemple selon le modèle IMX 411 commercialisé par Sony®. Pour un satellite en orbite à 500 km d'altitude, cela permet d'atteindre une résolution de 0.5 m, avec une fauchée de 7 km et une longueur L de 5 km. Le corps 11 du satellite a une dimension $1.53 \times 1.14 \times 1.0$ m. Deux générateurs solaires 12, 13 de 1 m² assurent une puissance de 250 W suffisante pour les besoins du satellite. Grâce à cette compacité, les inerties $I_{xx}$, $I_{yy}$, $I_{zz}$ selon les trois axes X, Y, Z du repère satellite sont faibles : $(I_{xx}, I_{yy}, I_{zz}) = (57, 76, 77)$ kg·m².

## Revendications

1. Procédé (50) d'acquisition d'images d'une zone terrestre Z par un engin spatial (10) en orbite défilante autour de la Terre (30) suivant une direction de défilement et avec une vitesse de défilement au sol $V_{sol}$, ledit engin spatial comportant un instrument d'observation (20) associé à un champ de vision (11, 12) fixe en repère engin spatial formant une empreinte au sol de longueur L suivant la direction de défilement, et à une résolution spatiale $R_s$ suivant la direction de défilement, ledit procédé (50) étant **caractérisé en ce qu'**il comporte :

   - une étape (51) d'observation d'une partie $P_1$ de la zone terrestre Z, comportant une étape de contrôle de l'attitude de l'engin spatial (10) pendant un intervalle temporel de durée $\alpha$ supérieure à $R_s/V_{sol}$, l'attitude de l'engin spatial étant contrôlée de sorte que l'empreinte au sol du champ de vision est maintenue immobile pendant la durée $\alpha$ et correspond à ladite partie $P_1$, et une étape d'acquisition par l'instrument d'observation d'une image de la partie $P_1$ au cours de l'intervalle temporel de durée $\alpha$,
   - une étape (52) de modification de l'attitude en tangage de l'engin spatial (10) de sorte à orienter le champ de vision de telle sorte que l'empreinte au sol correspond à une partie $P_2$ de la zone terrestre Z, les parties $P_1$ et $P_2$ de la zone terrestre Z étant contiguës ou se recouvrant au plus partiellement suivant la direction de défilement,
   - une étape (53) d'observation de la partie $P_2$ de la zone terrestre Z,

   et en **ce que** l'étape (52) de modification d'attitude en tangage est exécutée au cours d'un intervalle temporel de durée $\beta$ telle que la quantité $V_{sol}{\cdot}(\alpha + P)\text{-}1/L$ est inférieure à 3.

2. Procédé (50) selon la revendication 1, comportant, avant l'étape (51) d'observation de la partie $P_1$ :

   - une étape (54) d'observation d'une partie $P_0$ de la zone terrestre Z, les parties $P_0$ et $P_1$ étant contiguës ou se recouvrant au plus partiellement transversalement à la direction de défilement,
   - une étape (55) de modification de l'attitude en roulis de l'engin spatial (10) de sorte à orienter le champ de vision de telle sorte que l'empreinte au sol correspond à la partie $P_1$.

3. Procédé (50) selon la revendication 2, comportant, après l'étape (53) d'observation de la partie $P_2$ :

   - une étape (56) de modification de l'attitude en roulis de l'engin spatial (10) de sorte à orienter le champ de vision de telle sorte que l'empreinte au sol correspond à une partie $P_3$ de la zone terrestre Z, lesdites parties $P_3$ et $P_2$ étant contiguës ou se recouvrant au plus partiellement transversalement à la direction de défilement, lesdites parties $P_0$ et $P_3$ étant contiguës ou se recouvrant au plus partiellement suivant la direction de défilement,

- une étape (57) d'observation de la $P_3$ de la zone terrestre Z.

4. Procédé (50) selon l'une quelconque des revendications 1 à 3, dans lequel la durée $\alpha$ est comprise entre 200 ms et 1s.

5. Procédé selon l'une quelconque des revendications 1 à 4, dans lequel la durée $\beta$ est comprise entre 1s et 2s.

6. Procédé (50) selon l'une quelconque des revendications 1 à 5, comportant, au cours de chaque étape d'observation d'une partie de la zone terrestre Z, une tranquillisation de l'attitude de l'engin spatial (10) préalable à l'acquisition de l'image de la partie considérée.

7. Procédé (50) selon la revendication 6, dans lequel la durée de la tranquillisation, comprise dans la durée $\alpha$, est comprise entre 100 ms et 800 ms.

8. Procédé (50) selon l'une quelconque des revendications 1 à 7, dans lequel la zone terrestre Z comporte au moins une bande de longueur supérieure à 10 km obtenue par l'acquisition d'images d'au moins 3 parties agencées dans le prolongement l'une de l'autre dans la direction de défilement de l'engin spatial, les parties adjacentes dans la direction de défilement étant contiguës ou se recouvrant au plus partiellement suivant la direction de défilement.

9. Engin spatial (10) destiné à être placé en orbite défilante autour de la Terre (30) suivant une direction défilement et avec une vitesse de défilement au sol $V_{sol}$, ledit engin spatial (10) étant d'inertie en tangage It et comportant :

- des moyens de contrôle d'attitude ayant une capacité $C_t$ de formation de couple en tangage correspondant à la valeur maximale que peut prendre un couple en tangage formé par lesdits moyens de contrôle d'attitude,
- un instrument d'observation associé à un champ de vision (11, 12) fixe en repère engin spatial, ledit instrument d'observation comportant un nombre $N_p$ de cellules d'acquisition suivant la direction de défilement de l'engin spatial (10),

ledit engin spatial (10) étant **caractérisé en ce que** le nombre $N_p$ est supérieur à 1000, et **en ce que** le rapport Ct / It est supérieur à 0.01 s$^{-2}$, et **en ce qu'**il comporte un circuit de traitement configuré pour contrôler le fonctionnement de l'instrument d'observation et des moyens de contrôle d'attitude pour exécuter les étapes d'un procédé (50) d'acquisition selon l'une des revendications 1 à 8.

10. Engin spatial (10) selon la revendication 9, dans lequel la capacité Ct est supérieure à 0.8 N·m.

11. Engin spatial (10) selon l'une quelconque des revendications 9 à 10, dans lequel les moyens de contrôle d'attitude comportent au moins une roue à réaction récupératrice d'énergie électrique.

12. Engin spatial (10) selon l'une quelconque des revendications 9 à 11, dans lequel les moyens de contrôle d'attitude comportent au moins un actionneur gyroscopique.

13. Engin spatial (10) selon l'une quelconque des revendications 9 à 12, dans lequel l'instrument d'observation comporte au moins deux capteurs matriciels (24, 25) agencés transversalement à la direction de défilement et espacés d'une distance ($d_1$) non nulle inférieure à la largeur ($d_2$) de l'un au moins desdits deux capteurs matriciels (24, 25) mesurée transversalement à la direction de défilement.

14. Engin spatial (10) selon l'une quelconque des revendications 9 à 13, dans lequel l'instrument d'observation comporte un filtre de Bayer.

15. Engin spatial (10) selon l'une quelconque des revendications 9 à 14, dans lequel l'instrument d'observation est configuré pour activer successivement des cellules d'acquisition ou des groupes de cellules d'acquisition lors de l'acquisition d'une image.


**Patentansprüche**

1. Verfahren (50) zur Aufnahme von Bildern eines Erdgebiets Z durch ein Raumfahrzeug (10) in nichtstationärer Umlaufbahn um die Erde (30) gemäß einer Umlaufrichtung und mit einer Umlaufgeschwindigkeit über Grund $V_{sol}$, wobei das Raumfahrzeug ein Beobachtungsinstrument (20) aufweist, das einem festen Sichtfeld (11, 12) im Raumfahrzeug-Bezugssystem, das einen Bodenabdruck einer Länge L gemäß der Umlaufrichtung bildet, und einer räumlichen Auflösung $R_s$ gemäß der Umlaufrichtung zugeordnet ist, wobei das Verfahren (50) **dadurch gekennzeichnet ist, dass** es aufweist:

- einen Schritt (51) der Beobachtung eines Teils $P_1$ des Erdgebiets Z, der einen Schritt der Steuerung der Fluglage des Raumfahrzeugs (10) während eines Zeitintervalls einer Dauer $\alpha$ größer als $R_s/V_{sol}$, wobei die Fluglage des Raumfahrzeugs so gesteuert wird, dass der Bodenabdruck des Sichtfelds während der Dauer $\alpha$ unbeweglich gehalten wird und dem Teil $P_1$ entspricht, und einen Schritt der Aufnahme durch das Beobachtungsinstrument eines Bilds des Teils $P_1$ während des Zeitintervalls der Dauer $\alpha$ aufweist,
- einen Schritt (52) der Änderung der Nick-Fluglage des Raumfahrzeugs (10), um das Sichtfeld so auszurichten, dass der Bodenabdruck einem Teil $P_2$ des Erdgebiets Z entspricht, wobei die Teile $P_1$ und $P_2$ des Erdgebiets Z aneinandergrenzen oder sich höchstens teilweise gemäß der Umlaufrichtung überlappen,
- einen Schritt (53) der Beobachtung des Teils $P_2$ des Erdgebiets Z,

und dass der Schritt (52) der Änderung der Nick-Fluglage während eines Zeitintervalls einer Dauer $\beta$ derart ausgeführt wird, dass die Menge $V_{sol} \cdot (\alpha+\beta) \cdot 1/L$ geringer als 3 ist.

2. Verfahren (50) nach Anspruch 1, das vor dem Beobachtungsschritt (51) des Teils $P_1$ aufweist:

- einen Schritt (54) der Beobachtung eines Teils $P_0$ des Erdgebiets Z, wobei die Teile $P_0$ und $P_1$ aneinandergrenzen oder sich höchstens teilweise quer zur Umlaufrichtung überlappen,
- einen Schritt (55) der Änderung der Roll-Fluglage des Raumfahrzeugs (10), um das Sichtfeld so auszurichten, dass der Bodenabdruck dem Teil $P_1$ entspricht.

3. Verfahren (50) nach Anspruch 2, das nach dem Schritt (53) der Beobachtung des Teils $P_2$ aufweist:

- einen Schritt (56) der Änderung der Roll-Fluglage des Raumfahrzeugs (10), um das Sichtfeld so auszurichten, dass der Bodenabdruck einem Teil $P_3$ des Erdgebiets Z entspricht, wobei die Teile $P_3$ und $P_2$ aneinandergrenzen oder sich höchstens teilweise quer zur Umlaufrichtung überlappen, wobei die Teile $P_0$ und $P_3$ aneinandergrenzen oder sich höchstens teilweise gemäß der Umlaufrichtung überlappen,
- einen Schritt (57) der Beobachtung des $P_3$ des Erdgebiets Z.

4. Verfahren (50) nach einem der Ansprüche 1 bis 3, wobei die Dauer $\alpha$ zwischen 200 ms und 1s liegt.

5. Verfahren nach einem der Ansprüche 1 bis 4, wobei die Dauer $\beta$ zwischen 1s und 2s liegt.

6. Verfahren (50) nach einem der Ansprüche 1 bis 5, das während jedes Beobachtungsschritts eines Teils des Erdgebiets Z eine Beruhigung der Fluglage des Raumfahrzeugs (10) vor der Aufnahme des Bilds des betroffenen Teils aufweist.

7. Verfahren (50) nach Anspruch 6, wobei die Dauer der Beruhigung, die in der Dauer $\alpha$ enthalten ist, zwischen 100 ms und 800 ms liegt.

8. Verfahren (50) nach einem der Ansprüche 1 bis 7, wobei das Erdgebiet Z mindestens einen Streifen einer Länge von mehr als 10 km aufweist, der durch die Aufnahme von Bildern von mindestens 3 Teilen erhalten wird, die in der gegenseitigen Verlängerung in der Umlaufrichtung des Raumfahrzeugs angeordnet sind, wobei die in der Umlaufrichtung benachbarten Teile aneinandergrenzen oder sich höchstens teilweise gemäß der Umlaufrichtung überlappen.

9. Raumfahrzeug (10), das dazu bestimmt ist, in nichtstationärer Umlaufbahn um die Erde (30) gemäß einer Umlaufrichtung mit einer Umlaufgeschwindigkeit über Grund $V_{sol}$ platziert zu werden, wobei das Raumfahrzeug (10) eine Nickträgheit It hat und aufweist:

- Fluglagesteuerungseinrichtungen mit einer Kapazität $C_t$ der Bildung eines Nickdrehmoments entsprechend dem maximalen Wert, den ein Nickdrehmoment annehmen kann, das von den Fluglagesteuerungseinrichtungen gebildet wird,
- ein einem festen Sichtfeld (11, 12) im Raumfahrzeug-Bezugssystem zugeordnetes Beobachtungsinstrument, wobei das Beobachtungsinstrument eine Anzahl $N_p$ von Aufnahmezellen gemäß der Umlaufrichtung des Raumfahrzeugs (10) aufweist,

wobei das Raumfahrzeug (10) **dadurch gekennzeichnet ist, dass** die Anzahl $N_p$ höher ist als 1000, und dass das Verhältnis $C_t/I_t$ größer ist als 0,01 s$^{-2}$, und dass es eine Verarbeitungsschaltung aufweist, die konfiguriert ist, den Betrieb des Beobachtungsinstruments und der Fluglagesteuerungseinrichtungen zu steuern, um die Schritte eines Aufnahmeverfahrens (50) nach einem der Ansprüche 1 bis 8 auszuführen.

10. Raumfahrzeug (10) nach Anspruch 9, wobei die Kapazität Ct höher ist als 0,8 N·m.

11. Raumfahrzeug (10) nach einem der Ansprüche 9 bis 10, wobei die Fluglagesteuerungseinrichtungen mindestens ein Reaktionsrad mit Rückgewinnung elektrischer Energie aufweisen.

12. Raumfahrzeug (10) nach einem der Ansprüche 9 bis 11, wobei die Fluglagesteuerungseinrichtungen mindestens ein gyroskopisches Stellglied aufweisen.

13. Raumfahrzeug (10) nach einem der Ansprüche 9 bis 12, wobei das Beobachtungsinstrument mindestens zwei Matrix-Sensoren (24, 25) aufweist, die quer zur Umlaufrichtung angeordnet sind und einen Abstand ($d_1$) ungleich null geringer als die Breite ($d_2$) mindestens eines der zwei Matrix-Sensoren (24, 25) haben, gemessen quer zur Umlaufrichtung.

14. Raumfahrzeug (10) nach einem der Ansprüche 9 bis 13, wobei das Beobachtungsinstrument einen Bayer-Filter aufweist.

15. Raumfahrzeug (10) nach einem der Ansprüche 9 bis 14, wobei das Beobachtungsinstrument konfiguriert ist, nacheinander Aufnahmezellen oder Gruppen von Aufnahmezellen bei der Aufnahme eines Bilds zu aktivieren.

**Claims**

1. Method (50) of acquiring images of a terrestrial region Z using a spacecraft (10) in non-geostationary orbit around the Earth (30) along a direction of travel and at a speed of travel relative to the ground $V_{sol}$, said spacecraft comprising an observation instrument (20) associated with a field of view (11, 12) that is fixed within a spacecraft's frame of reference and forming a ground footprint of length L along the direction of travel, and associated with a spatial resolution $R_s$ along the direction of travel, said method (50) being **characterized in that** it comprises:

   - a step (51) of observing a portion $P_1$ of the terrestrial region Z, comprising a step of controlling the attitude of the spacecraft (10) during a time interval of duration $\alpha$ that is greater than $R_s/V_{sol}$, the attitude of the spacecraft being controlled such that the ground footprint of the field of view is kept stationary for the duration $\alpha$ and corresponds to said portion $P_1$, and a step of acquisition by the observation instrument of an image of portion $P_1$ during the time interval of duration $\alpha$,
   - a step (52) of modifying the pitch attitude of the spacecraft (10) so as to orient the field of view such that the ground footprint corresponds to a portion $P_2$ of the terrestrial region Z, portions $P_1$ and $P_2$ of the terrestrial region Z being contiguous or at most partially overlapping along the direction of travel,
   - a step (53) of observing portion $P_2$ of the terrestrial region Z,

   and **in that** the step (52) of modifying the pitch attitude is executed during a time interval of duration $\beta$ such that the quantity $V_{sol} \cdot (\alpha + \beta) \cdot 1/L$ is less than 3.

2. Method (50) according to claim 1, comprising, before the step (51) of observing portion $P_1$:

   - a step (54) of observing a portion $P_0$ of the terrestrial region Z, portions $P_0$ and $P_1$ being contiguous or at most partially overlapping transversely to the direction of travel,
   - a step (55) of modifying the roll attitude of the spacecraft (10) so as to orient the field of view such that the ground footprint corresponds to portion $P_1$.

3. Method (50) according to claim 2, comprising, after the step (53) of observing portion $P_2$:

   - a step (56) of modifying the roll attitude of the spacecraft (10) so as to orient the field of view such that the ground footprint corresponds to a portion $P_3$ of the terrestrial region Z, said portions $P_3$ and $P_2$ being contiguous or at most partially overlapping transversely to the direction of travel, said portions $P_0$ and $P_3$ being contiguous or at most partially overlapping along the direction of travel,
- a step (57) of observing $P_3$ of the terrestrial region Z.

4. Method (50) according to any one of claims 1 to 3, wherein the duration $\alpha$ is between 200 ms and 1 s.

5. Method according to any one of claims 1 to 4, wherein the duration $\beta$ is between 1s and 2s.

6. Method (50) according to any one of claims 1 to 5, comprising, during each step of observing a portion of the terrestrial region Z, a tranquilization of the attitude of the spacecraft (10) prior to acquisition of the image of the considered portion.

7. Method (50) according to claim 6, wherein the tranquilization duration, comprised within duration $\alpha$, is between 100 ms and 800 ms.

8. Method (50) according to any one of claims 1 to 7, wherein the terrestrial region Z comprises at least one strip of a length greater than 10 km obtained by the acquisition of images of at least three portions arranged within the extension of one another along the direction of travel of the spacecraft, the adjacent portions in the direction of travel being contiguous or at most partially overlapping along the direction of travel.

9. Spacecraft intended to be placed in non-geostationary orbit around the Earth (30) in a direction of travel and at a speed of travel relative to the ground $V_{sol}$, said spacecraft (10) having a pitch inertia $I_t$ and comprising:

   - attitude control means having a capacity Ct for the formation of pitch torque which corresponds to a maximum value that can take a pitch torque formed by said attitude control means,
   - an observation instrument associated with a field of view (11, 12) that is fixed within a spacecraft's frame of reference, said observation instrument comprising a number $N_p$ of acquisition cells along the direction of travel of the spacecraft (10),

   said spacecraft (10) being **characterized in that** the number $N_p$ is greater than 1000, and **in that** the $C_t/I_t$ ratio is greater than 0.01 s$^{-2}$ and **in that** it comprises a processing circuit configured to control the operation of the observation instrument and of the attitude control means to perform the steps of the acquisition method according to one of claims 1 to 8.

10. Spacecraft (10) according to claim 9, wherein the capacity Ct is greater than 0.8 N·m.

11. Spacecraft (10) according to any one of claims 9 to 10, wherein the attitude control means comprise at least one reaction wheel which recovers electrical energy.

12. Spacecraft (10) according to any one of claims 9 to 11, wherein the attitude control means comprise at least one gyroscopic actuator.

13. Spacecraft (10) according to any one of claims 9 to 12, wherein the observation instrument comprises at least two sensor arrays (24, 25) arranged transversely to the direction of travel and spaced apart by a non-zero distance ($d_1$) that is less than the width ($d_2$) of at least one of said two sensor arrays (24, 25) measured transversely to the direction of travel.

14. Spacecraft (10) according to any one of claims 9 to 13, wherein the observation instrument comprises a Bayer filter.

15. Spacecraft (10) according to any one of claims 9 to 14, wherein the observation instrument is configured for successively activating acquisition cells or groups of acquisition cells during the acquisition of an image.

FIG. 1

FIG. 2

**FIG. 3**

FIG. 4

FIG. 5

FIG. 6

FIG. 7

a)

| B | G | B | G | B | G | B | G |
|---|---|---|---|---|---|---|---|
| G | R | G | R | G | R | G | R |
| NIR | G | B | G | NIR | G | B | G |
| G | R | G | R | G | R | G | R |
| B | G | B | G | B | G | B | G |
| G | R | G | R | G | R | G | R |
| NIR | G | B | G | NIR | G | B | G |
| G | R | G | R | G | R | G | R |

26

b)

FIG. 8

FIG. 9

**EP 4 078 083 B1**

## RÉFÉRENCES CITÉES DANS LA DESCRIPTION

**Documents brevets cités dans la description**

- FR 2597985 A1
- US 8487996 B
- EP 2247505 A1